# FASCICULE DE BREVET EUROPEEN

(11) **EP 1 763 492 B1**
(45) Date de publication et mention de la délivrance du brevet: **31.03.2010**
(21) Numéro de dépôt: 05778216.1
(22) Date de dépôt: 27.06.2005
(51) Int. Cl.: C03B 37/02, C03B 37/16

(54) **INSTALLATION DE PRISE AUTOMATIQUE DE FILS**
AUTOMATISCHE GARNSPANNUNGSANLAGE
AUTOMATIC YARN-GRIPPING INSTALLATION

(30) Priorité: 28.06.2004 FR 0407063
(43) Date de publication de la demande: 21.03.2007
(73) Titulaire: OCV Intellectual Capital, LLC, Toledo, OH 43659 (US)
(72) Inventeur: KARBOWSKI, Jean-Pierre, décédé (FR); BOISSET, Jean-Paul, F-73230 BARBY (FR); SKURA, Frédéric, F-73420 DRUMETTAZ CLARAFOND (FR); BICHAT-GOBARD, Roger, F-73670 SAINT-PIERRE D'ENTREMONT (FR)
(74) Mandataire: Joly, Jean-Jacques
(86) Numéro de dépôt international: PCT/FR2005/050497
(87) Numéro de publication internationale: WO 2006/008408

(56) Documents cités:
- US-A- 5 935 289

## Description

La présente invention est relative à une installation de prise automatique de fils. Elle vise plus précisément encore une installation de prise de fils destinée à être utilisée au sein d'un procédé de coupe sous filière, procédé qui assure à la fois l'étirage et la coupe de brins de fils thermoplastiques, notamment de verre.

On rappelle que la fabrication de fils de verre de renforcement résulte d'un processus industriel complexe qui consiste à obtenir des fils à partir de filets de verre fondu s'écoulant au travers des orifices de filières A partir d'au moins une cabine de fibrage, ces filets sont étirés sous forme de filaments continus, puis ces filaments sont rassemblés en fils de base, lesquels fils sont ensuite par exemple coupés en continu de manière à produire une pluralité de brins de fils de verre. Cette phase du processus industriel est communément appelée « la coupe directe sous filière ».

Classiquement une cabine de fibrage consiste essentiellement en une arrivée de verre fondu venant d'un four, ce verre à haute température alimente une pluralité de filières en alliage de platine, lequel verre après passage dans des orifices pratiqués dans la filière donne naissance à des filaments.

Dans un processus de coupe directe sous filière, les filaments, après avoir reçu un ensimage et avoir été réunis en fils, sont dirigés vers un coupeur qui assure à la fois l'opération d'étirage et l'opération de coupe des fils en brins de fils de verre coupés.

D'une manière classique dans un procédé de coupe sous filière, cette opération est réalisée par un conducteur de filière. Elle intervient, au cours d'un cycle normal de production, de maintes fois, car elle est tributaire de la technologie et du fonctionnement d'un coupeur sous filière.

Celui-ci doit conférer aux fils de verre une vitesse d'étirage constante correspondant précisément au débit de la filière en régime permanent. Or, pour atteindre ce régime permanent, il est nécessaire de passer par une phase transitoire qui consiste essentiellement à une augmentation progressive de la vitesse d'étirage des fils. Cette phase transitoire est également présente après toute rupture inopinée de la production, comme par exemple lors d'une casse des fils Il est nécessaire de passer par une phase transitoire de relance qui nécessite un étirage à vitesse modérée qui peut être obtenu à la main ou par un tire-fil individuel placé en contre-bas du dispositif d'ensimage de chaque filière.

En principe lorsque le conducteur de filière juge que le régime thermique de la filière est stabilisé, il saisit le fil provenant du tire-fil de cette filière et le dirige vers un organe de relance situé après les organes de coupe, l'organe de relance étant adapté pour faire passer la vitesse d'étirage des fils d'une vitesse de l'ordre de quelques m/ s (de 1 à 5 m/ s) à quelques dizaines de m/s, qui correspond en fait à la vitesse nominale d'étirage atteinte en régime permanent.

Lorsque cette vitesse nominale est atteinte, les fils sont dirigés au niveau de l'organe coupeur proprement dit, constitué généralement d'une roue enclume et d'une roue à lames, adaptées pour débiter ses brins de fils de verre après passage des fils entre ces dernières

Or, on comprend que ce mouvement de va et vient entre la filière et la roue de relance du coupeur peut intervenir selon des phases programmées et selon des phases non programmées du cycle de production.

Au titre des phases programmées, il y a celles qui correspondent à des interventions de maintenance qui nécessitent l'interruption de fonctionnement de la machine, changement de l'organe de coupe par exemple.

Au titre des phases non programmées, il s'agit notamment des interventions du conducteur, lorsque la nappe de fils se brise à un endroit quelconque entre la sortie de filière et le coupeur proprement dit.

Quelle que soit la nature des phases, les va et vient du conducteur engendrent des déplacements nombreux qui peuvent avoir une durée non négligeable (surtout lorsque plusieurs filières se trouvent en défaut), ceci se concrétise par une perte de produit final (brins de fils coupés) et une production de déchet, et finalement génère une baisse de rendement de l'unité de production.

Une installation de coupe directe sous filière permettant de solutionner en partie ce problème est connue, notamment par le brevet US 5 935 289 ; cette dernière est équipée d'un dispositif mécanisé en forme de navette permettant d'une part, la prise d'au moins une nappe de fils et d'autre part, la dépose de cette dernière au niveau du coupeur sous filière.

L'inconvénient majeur de cette installation réside dans son encombrement important. En effet, le dispositif mécanisé de prise et de dépose de la nappe de fil se déplace sur un châssis qui fait face à l'installation de production en s'étendant depuis l'aplomb des filières jusqu'au coupeur proprement dit. Cette disposition « en rideau » constitue un risque pour les interventions du conducteur de filière, la sécurité de ce dernier peut être mise en défaut par le passage inopiné de la navette.

La présente invention vise donc à pallier ces inconvénients en proposant une installation sécurisée permettant de limiter les va-et-vient de l'opérateur entre la pluralité de cabines de fibrage juxtaposées et le coupeur.

L'installation de prise automatique de fils, selon l'invention, destinée à être mise en oeuvre au sein d'un procédé de coupe sous filière qui consiste à former des brins de fils de verre à partir de verre fondu, ledit verre fondu ayant traversé des orifices pratiqués au sein d'au moins une filière afin de former une pluralité de filaments, lesdits filaments étant réunis en au moins une nappe, ladite nappe étant dirigée après une opération d'ensimage, vers au moins un coupeur adapté pour couper au moins un fil formé par la réunion d'au moins une nappe en une pluralité de brins de fils de verre de longueur désirée et conformant ainsi un trajet entre la filière et le coupeur, comporte :
- au moins un premier organe de préhension pour saisir au moins une nappe de fils, ledit organe pouvant occuper une première position dans laquelle il saisit la nappe de fils et une seconde position dans laquelle il relâche la nappe de fils,
- une première boucle de convoyage pour déplacer le premier organe de préhension entre une première position dans laquelle ledit premier organe de préhension peut saisir au moins une nappe de fils et une seconde position dite de transfert dans laquelle ledit premier organe de préhension relâche ladite nappe de fils. Ladite instillation est caractérisés en ce qu'elle comporte:
- au moins un deuxième organe de préhension pour saisir au moins une nappe de fils, ledit organe pouvant occuper une première position dans laquelle il saisit la nappe de fils et une seconde position dans laquelle il relâche la nappe de fils,
- une deuxième boucle de convoyage pour déplacer le deuxième organe de préhension entre une première position dite de transfert dans laquelle ledit deuxième organe de préhension saisit au moins une nappe de fils relâchée par ledit premier organe de préhension et une seconde position dans laquelle ledit deuxième organe de préhension relâche ladite nappe de fils au niveau du coupeur.

Grâce à ces dispositions et notamment à la présence de deux boucles de convoyage, il est possible d'automatiser en sécurité le déplacement d'une nappe de fils entre une sortie de filière et un coupeur.

Dans des modes de réalisation préférés de l'invention, on peut éventuellement avoir recours en outre à l'une et/ ou à l'autre des dispositions suivantes :
- la première boucle de convoyage s'étend entre deux poulies d'entraînement respectivement positionnées de par et d'autre de chacune des extrémités de la pluralité de cabines juxtaposées, et selon une direction sensiblement perpendiculaire à un plan parallèle au trajet de ladite nappe de fils,
- la première boucle de convoyage est mise en mouvement à l'aide d'un actionneur adapté pour imprimer à ladite première boucle un mouvement permanent à vitesse contrôlée,
- l'installation comporte en outre au moins un organe de commande adapté pour modifier l'état dudit premier organe de préhension entre la première et la deuxième position,
- l'organe de commande comporte au moins une came mobile actionnée par un levier, ladite came étant positionnée au droit de la nappe de fils, ladite came étant munie d'une surface de guidage avec un organe de manoeuvre solidaire dudit premier organe de préhension,
- le premier organe de préhension peut être débrayable par rapport à la première boucle de convoyage,
- la deuxième boucle de convoyage s'étend entre au moins deux poulies d'entraînement et de guidage positionnées de telle sorte que d'une part, le deuxième organe de préhension effectue une trajectoire qui intercepte celle réalisée par le premier organe de préhension et par une roue de relance du coupeur,
- la deuxième boucle de convoyage est solidaire d'une structure articulée sur le coupeur, ladite structure étant protégée par au moins un capot,
- la première boucle de convoyage réalise un mouvement linéaire selon une direction sensiblement parallèle à l'aplomb des filières juxtaposées.

D'autres caractéristiques et avantages de l'invention apparaîtront au cours de la description suivante d'une de ses formes de réalisation, donnée à titre d'exemple non limitatif, en regard des dessins joints. Sur les dessins:
- La figure 1 est une vue de face schématique de l'installation objet de l'invention ;
- La figure 2 est une vue en détail de l'une des extrémités de la première boucle de convoyage visible en figure 1 ;
- La figure 3 est une vue en perspective du coupeur ;
- La figure 4 est une vue en perspective et à grande échelle de l'organe de préhension équipant la première boucle de convoyage représentée en figure 2 ;

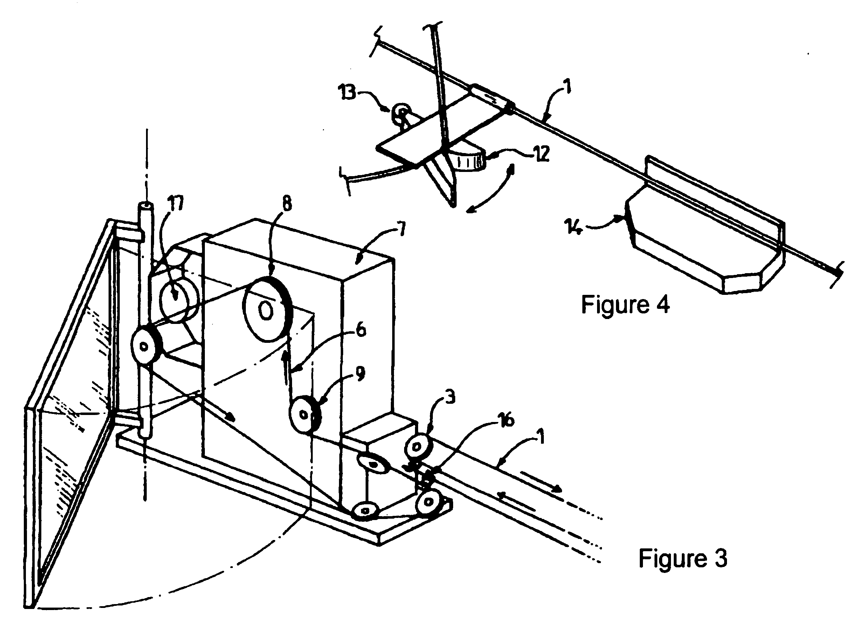

- La figure 4 est une vue en perspective du coupeur ;

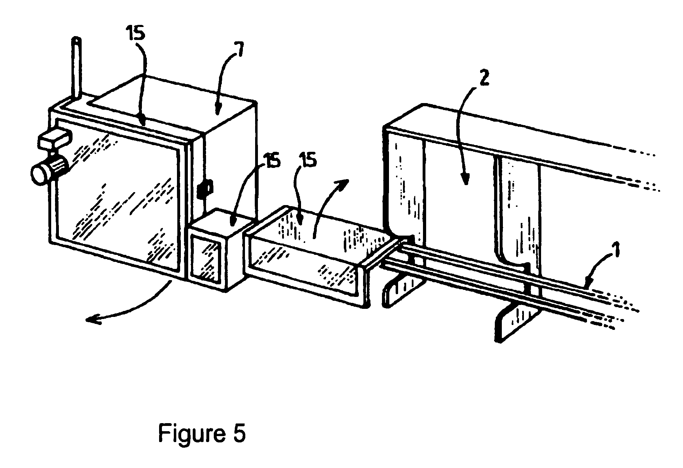

- La figure 5 est une vue en perspective et en détail de l'installation faisant apparaître les capots de protection.

On a représenté très schématiquement en figure 5 une unité de production permettant la mise en oeuvre d'un procédé dit « de coupe directe sous filière ». Ce procédé est bien connu de l'homme du métier et à fait l'objet de nombreuses publications, notamment EP 0 849 381 B1, et nous ne décrirons pas plus en détail son fonctionnement.

Globalement, cette unité de production comporte une batterie de filières juxtaposées 2, chacune de ces filières étant susceptible de produire des brins de fils de verre à partir de verre fondu, ledit verre fondu ayant traversé des orifices pratiqués au sein de l'une au moins de ces filières afin de former une pluralité de filaments, lesdits filaments étant réunis en au moins une nappe, ladite nappe étant dirigée après une opération d'ensimage, vers au moins un coupeur, également représenté sur cette figure, adapté pour couper au moins un fil formé par la réunion d'au moins une nappe en une pluralité de brins de fils de verre de longueur désirée.

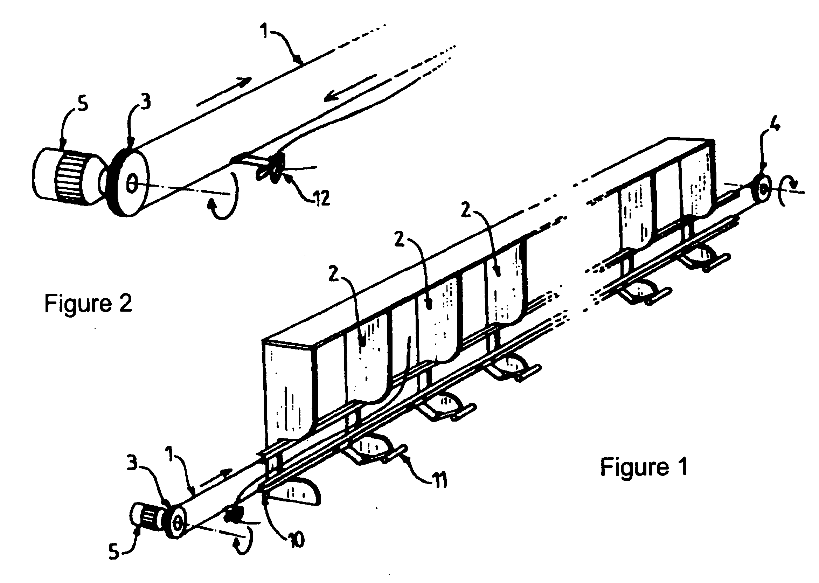

Comme cela apparaît en figures 1 et 2 également, une première boucle de convoyage 1 est positionnée à l'aplomb des filières 2 et selon un plan sensiblement parallèle à la sortie des filaments provenant de chacune des filières. Cette première boucle de convoyage 1 est établie entre au moins deux poulies 3, 4, dont l'une au moins est motorisée par un actionneur 5, chacune des poulies étant positionnée respectivement à chaque extrémité de la batterie de filières 2.

L'actionneur 5 de type moteur hydraulique ou électrique, permet, par le biais d'un réducteur, d'imprimer un mouvement permanent et à vitesse contrôlée à la boucle de convoyage 1 qui présente un profil sensiblement linéaire.

De même, une deuxième boucle de convoyage 6 est visible en figure 3 et s'étend sensiblement dans un plan parallèle à la façade du coupeur 7. Cette deuxième boucle de convoyage 6 présente un profil sinueux de manière à épouser au plus prêt la façade du coupeur 7, ce profil sinueux étant obtenu par le positionnement à des endroits adéquats d'une pluralité de poulies 8, 9 d'entraînement et de guidage, formant pour certaines, un renvoi d'angle.

D'une manière similaire à la première boucle de convoyage 1, la deuxième boucle de convoyage 6 est mise en mouvement par l'intermédiaire d'un actionneur (du type par exemple groupe moto réducteur électrique ou hydraulique, non représenté sur cette figure).

Les première et deuxième boucles de convoyage 1, 6 visibles en figures 3 et 4, sont réalisées à l'aide d'un câble métallique, d'une courroie lisse ou crantée, d'une chaîne, d'un vérin, de tout autre dispositif permettant de réaliser une cinématique équivalente, c'est-à-dire assurer le déplacement sans glissement entre deux points, d'un organe supporté par ladite boucle.

Dans l'exemple non limitatif représenté en figure 2, les boucles de convoyage sont réalisées à partir d'un câble métallique, notamment en acier, tendu entre deux poulies, dont l'une au moins est motorisée, le profil de la gorge de poulie étant adapté pour limiter, voire supprimer tout glissement avec la surface périphérique du câble (un profil sensiblement conique de cette gorge est particulièrement bien adapté).

Sur les figures 4 et 5, on a représenté à une plus grande échelle la façade de filières juxtaposées visibles en figure 1. La première boucle de convoyage 1 est protégée et guidée à l'intérieur de profilé métallique 10 de section droite transversale en U, ces profilés prenant place au sein d'un embrasement réalisé en partie basse desfilièresde manière à ne pas gêner le passage des filaments en verre.

Au niveau de chaque puits de filière est positionné un organe de manoeuvre 11 conformé en pédale ou levier (visible en figure 1), celui-ci permet de manoeuvrer une came entre une première position dans laquelle un premier organe de préhension 12 coopérant avec la première boucle de convoyage 1 peut saisir une nappe de fils de verre et une seconde position dans laquelle ce même organe de préhension en passant au voisinage de la nappe ne peut la saisir comme cela apparaîtra en plus en détail en figure 4.

En figure 4, on a représenté en détail le premier organe de préhension 12. En forme de pince et disposant de mâchoires à profil incurvé afin d'améliorer le guidage des filaments, cet organe de préhension 12 coopère avec la boucle de convoyage 1 soit de manière permanente (sertissage, pinçage), soit de manière non permanente et dans ce cas, il est débrayable. La pince est pourvue d'un talon supportant un galet 13 qui permet d'ouvrir ou de fermer les mâchoires de ladite pince.

Ce mouvement d'ouverture ou de fermeture des mâchoires est provoqué par le passage du galet 13 sur des surfaces de guidage réalisée sur le chant de ladite came 14 selon la cinématique suivante :
- lorsque le galet 13 est en contact de la surface de guidage inclinée, il y a ouverture des mâchoires,
- lorsque qu'il n'y a plus contact entre le galet 13 et la surface de guidage de la came 14 qui est parallèle à la boucle de convoyage, il y a fermeture des mâchoires autour de la nappe de filaments et entraînement de cette dernière du fait du mouvement de translation de la boucle de convoyage 1 supportant l'organe de préhension 12.

Cette situation n'est réalisée que lorsque la came 14 est amenée en position suite à l'action du conducteur de filière sur le levier 11 (comme cela a été expliqué précédemment).

La figure 3 montre le cheminement de la deuxième boucle de convoyage 6 au niveau de la façade du coupeur 7 sous filière. Ce cheminement peut être plus sinueux que celui réalisé par la première boucle de convoyage afin de mieux épouser le gabarit du coupeur. Grâce au positionnement adéquat des poulies de renvoi et de guidage 8, 9, il est possible d'intégrer cette deuxième boucle de convoyage au niveau d'une installation de production existante. On remarque en outre que cette boucle de convoyage 6 est protégée par une pluralité de capots 15 articulés sur le châssis du coupeur (se reporter en figure 5).

Selon un mode préféré, la deuxième boucle de convoyage 6 est solidaire d'un châssis articulé par rapport au bâti du coupeur 7. Cela permet d'utiliser le coupeur de manière traditionnel, c'est-à-dire sans le recours à la deuxième boucle de convoyage 6.

Sûr la deuxième boucle de convoyage 6 est monté un deuxième organe de préhension 16 dont la structure et le fonctionnement sont similaires à celles du premier organe de préhension. Sensiblement en forme de pince, le deuxième organe de préhension peut occuper deux positions distinctes :
- une première position selon laquelle il peut saisir la nappe en prise avec le premier organe de préhension 12,
- une seconde position selon laquelle au contraire il ne peut saisir la nappe de filaments véhiculée par la première boucle de convoyage 1.
A cette fin, on prévoit que la première boucle de convoyage 1 et la seconde boucle de convoyage 6 présentent au niveau de la zone dans laquelle doit s'effectuer le transfert de la nappe de fils d'une boucle à l'autre des trajectoires sensiblement parallèles, comme cela est représenté en figure 3, sensiblement en partie basse du coupeur afin que la trajectoire décrite par le premier organe de préhension 12 intercepte celle du deuxième organe de préhension 16.

Le deuxième organe de préhension 16, grâce à la deuxième boucle de convoyage, fait cheminer la nappe de fils jusqu'à une roue de relance 17 du coupeur 7.

On rappelle que la roue de relance est l'organe qui permet d'étirer les nappes de fils pendant des phases transitoires de fonctionnement du coupeur.

En effet, lorsqu'il est nécessaire de procéder à une phase de maintenance sur le coupeur (traditionnellement un changement des organes de coupe), ou lorsque une nappe de filaments s'est brisée suite à un dysfonctionnement de la filière, il convient d'évacuer lesfils en continuant de les étirer. La roue de relance participe à ce processus durant ces phases transitoires en enroulant sur elle-même la nappe de fils

La roue de relance 17, représentée en figure 3, est donc pourvue d'un dispositif de préhension automatique de la nappe de fils véhiculée par la deuxième boucle de convoyage au niveau du deuxième organe de préhension.

La roue de relance est positionnée de telle sorte que le dispositif de préhension intercepte la trajectoire du deuxième organe de préhension.

Dans l'exemple de réalisation, la roue de relance est munie d' une saignée. Cette saignée, lorsqu'elle croise la trajectoire de la nappe de fils et sous l'effet d'un mouvement de rotation, engrène la nappe de fils et l'enroule les fils sur la surface périphérique de la roue de relance.

Dans l'éventualité où le deuxième organe de préhension n'aurait pas une pince à mâchoires pilotées, il convient alors de positionner un couteau ou tout autre organe similaire de manière à ce qu'il puisse libérer la nappe du deuxième organe de préhension avant que la roue de relance soit animée d'un mouvement de rotation.

L'invention telle que précédemment décrite offre de multiples avant ages :
- les deux boucles de convoyage avec leur organe de préhension respectif sont positionnées dans des zones de l'unité de production qui sont protégées, garantissant ainsi la sécurité des utilisateurs,
- cette installation de prise automatique des fils n'est pas encombrante et est compatible avec un fonctionnement manuel de l'installation de coupe directe sous filière, le conducteur filière peut, en cas de problème, alimenter manuellement le coupeur

## Revendications

1. Installation de prise automatique de fils, destinée à être mise en oeuvre au sein d'un procédé de coupe sous filière qui consiste à former des brins de fils de verre à partir de verre fondu, ledit verre fondu ayant traversé des orifices pratiqués au sein d'au moins une filière afin de former une pluralité de filaments, lesdits filaments étant réunis en au moins une nappe, ladite nappe étant dirigée après une opération d'ensimage, vers au moins un coupeur (7) adapté pour couper au moins un fil formé par la réunion d'au moins une nappe en une pluralité de brins de fils de verre de longueur désirée et conformant ainsi un trajet entre la filière et le coupeur, ladite installation comprend :
- au moins un premier organe de préhension (12) pour saisir au moins une nappe de fils, ledit organe (12) pouvant occuper une première position dans laquelle il saisit la nappe de fils et une seconde position dans laquelle il relâche la nappe de fils,
- une première boucle de convoyage (1) pour déplacer le premier organe de préhension (12) entre une première position dans laquelle ledit premier organe de préhension (12) peut saisir au moins une nappe de fils et une seconde position dite de transfert dans laquelle ledit premier organe de préhension (12) relâche ladite nappe de fils,
ladite installation est **caractérisée en ce qu'**elle comporte,
- au moins un deuxième organe de préhension (16) pour saisir au moins une nappe de fils, ledit organe pouvant occuper une première position dans laquelle il saisit la nappe de fils et une seconde position dans laquelle il relâche la nappe de fils,
- une deuxième boucle de convoyage (6) pour déplacer le deuxième organe de préhension (16) entre une première position dite de transfert dans laquelle ledit deuxième organe de préhension (16) saisit au moins une nappe de fils relâchée par ledit premier organe de préhension (12) et une seconde position dans laquelle ledit deuxième organe de préhension (16) relâche ladite nappe de fils au niveau du coupeur (7).

2. Installation selon la revendication 1, **caractérisée en ce que** la première boucle de convoyage (1) s'étend entre deux poulies (3, 4) d'entraînement respectivement positionnées de par et d'autre de chacune des extrémités d'une pluralité de cabines de fibrage juxtaposées, à l'aplomb des filières (2) et selon un plan sensiblement parallèle à la sortie des filaments provenant de chacune des filières.

3. Installation selon la revendication 1 ou 2, **caractérisée en ce que** la première boucle de convoyage (1) est mise en mouvement à l'aide d'un actionneur (5) adapté pour imprimer à ladite première boucle un mouvement permanent à vitesse contrôlée.

4. Installation selon la revendication 1, **caractérisée en ce qu'**elle comporte en outre au moins un organe de commande adapté pour modifier l'état dudit premier organe de préhension (12) entre la première et la deuxième position.

5. Installation selon la revendication 4, **caractérisée en ce que** l'organe de commande comporte au moins une came (14) mobile actionnée par un levier (11), ladite came (14) étant positionnée au droit de la nappe de fils, ladite came étant munie d'une surface de guidage avec un organe de manoeuvre solidaire dudit premier organe de préhension.

6. Installation selon la revendication 1 ou 2, **caractérisée en ce que** le premier organe de préhension (12) est débrayable par rapport à la première boucle de convoyage (1).

7. Installation selon la revendication 1, **caractérisée en ce que** la deuxième boucle de convoyage (6) s'étend entre au moins deux poulies d'entraînement et de guidage (8, 9) positionnées de telle sorte que le deuxième organe de préhension (16) effectue une trajectoire qui intercepte celle réalisée par le premier organe de préhension (12) et par une roue de relance (17) du coupeur (7).

8. Installation selon l'une des revendications 1 à 7, **caractérisée en ce que** la deuxième boucle de convoyage (6) est protégée par au moins un capot (15) monté mobile par rapport au coupeur (7).

9. Installation selon l'une des revendications 1 à 3, **caractérisée en ce que** la première boucle de convoyage (1) réalise un mouvement linéaire selon une direction sensiblement parallèle à l'aplomb des filières (2) et selon un plan sensiblement parallèle à la sortie des filaments provenant de chacune des filières juxtaposées.

## Claims

1. An installation for automatically taking yarns, for implementation within a method of in-line chopping that consists in forming strands of glass yarns from molten glass, said molten glass being passed through orifices formed within at least one die so as to form a plurality of filaments, said filaments being brought together in at least one sheet, said sheet being directed after a sizing operation towards at least one cutter (7) suitable for cutting at least one yarn formed by the combination of at least one sheet into a plurality of strands of glass yarn of desired length and thus shaping a path between the die and the cutter, said installation comprising:
· at least a first gripper member (12) for taking hold of at least one sheet of yarns, said member (12) being capable of occupying a first position in which it takes hold of the sheet of yarns, and a second position in which it releases the sheet of yarns;
· a first conveyor loop (1) for moving the first gripper member (12) between a first position in which said first gripper member (12) can take hold of at least one sheet of yarns, and a second or "transfer" position in which said first gripper member (12) releases said sheet of yarns,
said installation being **characterized in that** it comprises:
· at least a second gripper member (16) for taking hold of at least one sheet of yarns, said member being capable of occupying a first position in which it takes hold of the sheet of yarns and a second position in which it releases the sheet of yarns; and
· a second conveyor loop (6) for moving the second gripper member (16) between a first or "transfer" position in which said second gripper member (16) takes hold of at least one sheet of yarns released by said first gripper member (12), and a second position in which said second gripper member (16) releases said sheet of yarns at the cutter (7).

2. An installation according to claim 1, **characterized in that** the first conveyor loop (1) extends between two drive pulleys (3, 4) respectively positioned on either side of each of the ends of a plurality of juxtaposed fiberizing compartments, vertically in register with the dies (2) and in a plane that is substantially parallel to the outlet for filaments coming from each of the dies.

3. An installation according to claim 1 or claim 2, **characterized in that** the first conveyor loop (1) is set into motion with the help of an actuator (5) adapted to impart continuous motion at a controlled speed to the first loop.

4. An installation according to claim 1, **characterized in that** it also includes at least one control member adapted to modify the state of said first gripper member (12) between the first and second positions.

5. An installation according to claim 4, **characterized in that** the control member includes at least one movable cam (14) actuated by a lever (11), said cam (14) being positioned in register with the sheet of yarns, said cam being provided with a guide surface having a drive member secured to said first gripper member.

6. An installation according to claim 1 or claim 2, **characterized in that** the first gripper member (12) is declutchable relative to the first conveyor loop (1).

7. An installation according to claim 1, **characterized in that** the second conveyor loop (6) extends between at least two drive and guide pulleys (8, 9) positioned in such a manner that the second gripper member (16) follows a path that intercepts the path followed by the first gripper member (12) and by a restart wheel (17) of the cutter (7).

8. An installation according to any one of claims 1 to 7, **characterized in that** the second conveyor loop (6) is protected by at least one cover (15) mounted to move relative to the cutter (7).

9. An installation according to any one of claims 1 to 3, **characterized in that** the first conveyor loop (1) performs linear movement in a direction that is substantially parallel to vertically in register with the dies (2) and in a plane that is substantially parallel to the outlet of filaments coming from each of the juxtaposed dies.

## Patentansprüche

1. Anlage zum automatischen Erfassen von Fäden, die dazu bestimmt ist, in einem Verfahren zum Schneiden unter der Spinndüse eingesetzt zu werden, das darin besteht, aus geschmolzenem Glas Glasfasern zu bilden, wobei das geschmolzene Glas in wenigstens einer Spinndüse ausgebildete Öffnungen durchlaufen hat, um eine Vielzahl von Filamenten zu bilden, wobei die Filamente zu wenigstens einer Lage zusammengefaßt werden, wobei die Lage nach einem Schlichtungsschritt zu wenigstens einer Schneidevorrichtung (7) geleitet wird, die ausgebildet ist, um wenigstens einen durch die Zusammenfassung wenigstens einer Lage gebildeten Faden in eine Vielzahl von Glasfasern gewünschter Länge zu schneiden, und auf diese Weise zwischen der Spinndüse und der Schneidevorrichtung eine Strecke gebildet wird, welche Anlage folgendes umfaßt:
- wenigstens ein erstes Greiforgan (12), um wenigstens eine Fadenlage zu ergreifen, wobei das Organ (12) eine erste Position, in der es die Fadenlage ergreift, und eine zweite Position, in der es die Fadenlage losläßt, einnehmen kann,
- eine erste Förderschleife (1), um das erste Greiforgan (12) zwischen einer ersten Position, in der das erste Greiforgan (12) wenigstens eine Fadenlage ergreifen kann, und einer zweiten sogenannten Transferposition, in der das erste Greiforgan (12) die Fadenlage losläßt, zu bewegen,
die Anlage ist **dadurch gekennzeichnet, daß** sie folgendes umfaßt:
- wenigstens ein zweites Greiforgan (16), um wenigstens eine Fadenlage zu ergreifen, wobei das Organ eine erste Position, in der es die Fadenlage ergreift, und eine zweite Position, in der es die Fadenlage losläßt, einnehmen kann,
- eine zweite Förderschleife (6), um das zweite Greiforgan (16) zwischen einer ersten sogenannten Transferposition, in der das zweite Greiforgan (16) wenigstens eine durch das erste Greiforgan (12) losgelassene Fadenlage ergreift, und einer zweiten Position, in der das zweite Greiforgan (16) die Fadenlage im Bereich der Schneidevorrichtung (7) losläßt, zu bewegen.

2. Anlage nach Anspruch 1, **dadurch gekennzeichnet, daß** die erste Förderschleife (1) sich zwischen zwei Antriebsrollen (3, 4), welche auf beiden Seiten eines jeden Endes einer Vielzahl von nebeneinander angeordneten Faserziehkammern positioniert sind, genau unter den Spinndüsen (2) und in einer zum Austritt der aus jeder der Spinndüsen kommenden Filamente im wesentlichen parallelen Ebene erstreckt.

3. Anlage nach Anspruch 1 oder 2, **dadurch gekennzeichnet, daß** die erste Förderschleife (1) mit Hilfe eines Antriebsteils (5) in Bewegung versetzt wird, das ausgebildet ist, um die erste Schleife permanent und mit kontrollierter Geschwindigkeit zu bewegen.

4. Anlage nach Anspruch 1, **dadurch gekennzeichnet, daß** sie ferner wenigstens ein Steuerorgan umfaßt, das ausgebildet ist, um den Zustand des ersten Greiforgans (12) zwischen der ersten und der zweiten Position zu ändern.

5. Anlage nach Anspruch 4, **dadurch gekennzeichnet, daß** das Steuerorgan wenigstens einen über einen Hebel (11) betätigten beweglichen Nocken (14) umfaßt, wobei der Nocken (14) direkt an der Fadenlage positioniert ist, wobei der Nocken mit einer Fläche zur Führung mit einem mit dem ersten Greiforgan fest verbundenen Betätigungsorgan versehen ist.

6. Anlage nach Anspruch 1 oder 2, **dadurch gekennzeichnet, daß** das erste Greiforgan (12) gegenüber der ersten Förderschleife (1) ausrückbar ist.

7. Anlage nach Anspruch 1, **dadurch gekennzeichnet, daß** die zweite Förderschleife (6) sich zwischen wenigstens zwei Antriebs- und Führungsrollen (8, 9) erstreckt, die derart angeordnet sind, daß das zweite Greiforgan (16) eine Bahn beschreibt, die diejenige auffängt, welche durch das erste Greiforgan (12) und durch ein Wiederaufnahmerad (17) der Schneidevorrichtung (7) beschrieben wird.

8. Anlage nach einem der Ansprüche 1 bis 7, **dadurch gekennzeichnet, daß** die zweite Förderschleife (6) durch wenigstens eine gegenüber der Schneidevorrichtung (7) beweglich angebrachte Abdeckhaube (15) geschützt ist.

9. Anlage nach einem der Ansprüche 1 bis 3, **dadurch gekennzeichnet, daß** die erste Förderschleife (1) eine lineare Bewegung entlang einer im wesentlichen parallelen Richtung genau unter den Spinndüsen (2) und in einer zum Austritt der aus jeder der nebeneinander angeordneten Spinndüsen kommenden Filamente im wesentlichen parallelen Ebene ausführt.
